# EUROPEAN PATENT APPLICATION

(11) **EP 4 800 653 A1**
(43) Date of publication of application: **02.09.2026**
(21) Application number: 24881524.3
(22) Date of filing: 18.10.2024
(51) Int. Cl.: G06T 11/60, G06F 3/04845, G06F 3/0486, G06F 3/04883

(54) **IMAGE PROCESSING METHOD AND APPARATUS, DEVICE, COMPUTER READABLE STORAGE MEDIUM, AND PRODUCT**

(30) Priority: 24.10.2023 CN 202311389333
(71) Applicant: Beijing Zitiao Network Technology Co., Ltd., Beijing 100190 (CN)
(72) Inventor: CHEN, Yongxin, Beijing 100028 (CN); HE, Xiao, Beijing 100028 (CN)
(74) Representative: Marks & Clerk LLP
(86) International application number: PCT/CN2024/125699
(87) International publication number: WO 2025/087159

(57) **Abstract**

Embodiments of the present disclosure provide an image processing method and apparatus, a device, a computer readable storage medium, and a product. The method comprises: in response to a selection operation triggered by a user, obtaining an image material determined by the user; displaying a preset image editing page on the basis of the image material, and displaying the image material and at least one preset background option in the image editing page; in response to a selection operation of the user on the at least one background option, generating a target image on the basis of a target background option selected by the user and a content body area in the image material, wherein the content body area is obtained by matting of body content from the image material; and displaying the target image in the image editing page.

## Description

The present application claims priority to Chinese Patent Application No. 202311389333.3, filed on October 24, 2023, which is incorporated herein by reference in its entirety as a part of the present application.

### TECHNICAL FIELD

Embodiments of the present disclosure relate to an image processing method and apparatus, a device, a computer-readable storage medium, and a product.

### BACKGROUND

With the continuous advancement of artificial intelligence technology, users can generate target images based on selected image materials and background options through the artificial intelligence technology in applications (APPs).

In the related art, in order to implement the generation of a target image, it is necessary to first perform matting on an image material provided by a user, and then add a matting result corresponding to the image material to a background image determined by the user.

However, the target image generated using the above-mentioned method often exhibits stiff and false effects, failing to meet actual needs of users.

### SUMMARY

Embodiments of the present disclosure provide an image processing method and apparatus, a device, a computer-readable storage medium, and a product.

According to a first aspect, the embodiments of the present disclosure provide an image processing method. The method includes:
obtaining, in response to a selection operation triggered by a user, an image material determined by the user;
displaying a preset image editing page based on the image material, and displaying the image material and at least one preset background option on the image editing page;
generating, in response to a selection operation of the user for the at least one background option, a target image based on a target background option selected by the user and a content subject region in the image material, where the content subject region is obtained after performing matting on subject content in the image material; and
displaying the target image on the image editing page.

According to a second aspect, the embodiments of the present disclosure provide an image processing apparatus. The apparatus includes:
an obtaining module configured to obtain, in response to a selection operation triggered by a user, an image material determined by the user;
a display module configured to display a preset image editing page based on the image material, and display the image material and at least one preset background option on the image editing page;
a generation module configured to generate, in response to a selection operation of the user for the at least one background option, a target image based on a target background option selected by the user and a content subject region in the image material, where the content subject region is obtained after performing matting on subject content in the image material; and
a processing module configured to display the target image on the image editing page.

According to a third aspect, the embodiments of the present disclosure provide an electronic device. The electronic device includes a processor and a memory;
the memory stores computer-executable instructions; and
the computer-executable instructions stored in the memory, when executed by the processor, cause the at least one processor to perform the image processing method according to the first aspect and various possible designs of the first aspect.

According to a fourth aspect, the embodiments of the present disclosure provide a computer-readable storage medium. The computer-readable storage medium stores computer-executable instructions, and the computer-executable instructions, when executed by a processor, cause the image processing method according to the first aspect and various possible designs of the first aspect to be implemented.

According to a fifth aspect, the embodiments of the present disclosure provide a computer program product including a computer program, and the computer program, when executed by a processor, causes the image processing method according to the first aspect and various possible designs of the first aspect to be implemented.

### BRIEF DESCRIPTION OF DRAWINGS

In order to describe the technical solutions in the embodiments of the present disclosure more clearly, the drawings for describing the embodiments will be briefly described below. Apparently, the drawings in the following description are some embodiments of the present disclosure, and those of ordinary skill in the art may still derive other drawings from these drawings without creative efforts.
Fig. 1 is a schematic flowchart of an image processing method according to an embodiment of the present disclosure;
Fig. 2 is a schematic diagram of interface interaction according to an embodiment of the present disclosure;
Fig. 3 is a schematic flowchart of an image processing method according to another embodiment of the present disclosure;
Fig. 4 is a schematic flowchart of an image processing method according to another embodiment of the present disclosure;
Fig. 5 is a schematic diagram of a display interface according to an embodiment of the present disclosure;
Fig. 6 is a schematic flowchart of an image processing method according to another embodiment of the present disclosure;
Fig. 7 is another schematic diagram of interface interaction according to an embodiment of the present disclosure;
Fig. 8 is a schematic flowchart of an image processing method according to another embodiment of the present disclosure;
Fig. 9 is a schematic diagram of another display interface according to an embodiment of the present disclosure;
Fig. 10 is a schematic structural diagram of an image processing apparatus according to an embodiment of the present disclosure; and
Fig. 11 is a schematic structural diagram of an electronic device according to an embodiment of the present disclosure.

### DETAILED DESCRIPTION

In order to make the objectives, technical solutions, and advantages of embodiments of the present disclosure clearer, the technical solutions in the embodiments of the present disclosure are described clearly and completely below with reference to the drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

In order to solve the problem of excessively long waiting time in image generation methods, the present disclosure provides an image processing method and apparatus, a device, a computer-readable storage medium, and a product.

It should be noted that the image processing method and apparatus, the device, the computer-readable storage medium, and the product provided in the present disclosure can be applied to any artificial intelligence image generation scenario.

At present, during a process of image generation based on artificial intelligence, it is necessary to first obtain an image material uploaded by a user. An extraction operation is performed on key content in the image material, during which there is a need to wait on a current page. After the extraction is completed, a jump to a next material determination page occurs for selection of content such as a background option or a decorative material. In the image generation process, each step needs to wait for a processing result of the previous step, which often results in a relatively long waiting time, negatively affecting the user experience.

During the process of solving the above-mentioned problem, the inventors have found through research that, in order to enable quick image generation and reduce the waiting time, after obtaining the image material determined by the user, a content subject extraction operation on the image material may be performed in the background through a preset image processing algorithm, and a direct jump to a selection page for displaying the background option occurs in a display interface. This eliminates the need for the user to wait for an extraction result for the content subject on the image material determination page, thereby making the operation process smoother.

In addition, the image processing algorithm in the background can complete the content subject extraction operation on the image material during the process of the user selecting the background option. After the background option selected by the user is obtained, a synthesis operation of the target image may be performed directly based on the content subject and the background option, thereby effectively improving the efficiency of image generation.

According to the image processing method and apparatus, the device, the computer-readable storage medium, and the product provided in the embodiments, processing the image material in the background after the image material determined by the user is obtained allows a direct jump to the image editing page for selection of the background option, where the selection of the background option is independent of the processing result for the image material, thereby avoiding excessive waiting time. In addition, after the image material and the background option are obtained, the target image may be generated based on the background option and the content subject region that is obtained by performing matting on the image material, and the target image may be displayed. This allows a more realistic and natural target image to be generated based on an interaction operation triggered by the user, thereby improving the quality of the target image.

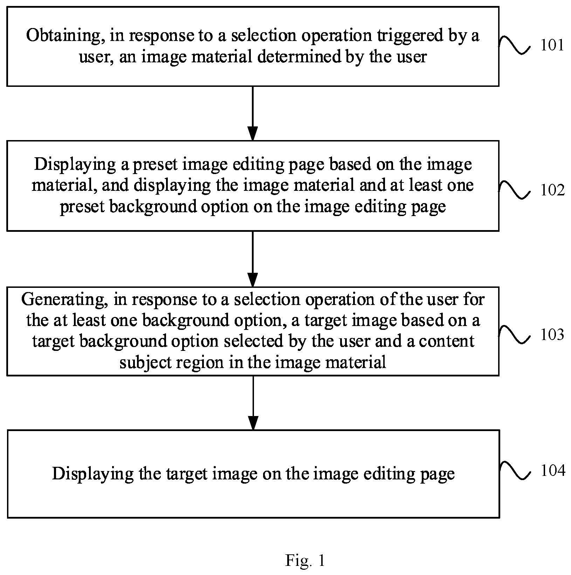

Fig. 1 is a schematic flowchart of an image processing method according to an embodiment of the present disclosure. As shown in Fig. 1, the method includes the following steps.

Step 101: obtaining, in response to a selection operation triggered by a user, an image material determined by the user.

An execution entity of this embodiment is an image processing apparatus. The image processing apparatus may be coupled to a terminal device to determine the image material and a background option based on a human-computer interaction operation between the user and the terminal device, respectively, and perform an image generation operation based on the image material and the background option.

Optionally, the image processing apparatus may be coupled to a server. The server can be communicatively connected to the terminal device to obtain the image material and the background option that are determined by the user on the terminal device, perform the image generation operation based on the image material and the background option, and control the terminal device to display a generated target image.

In many application scenarios, images need to be generated based on user-selected materials using an artificial intelligence-based image processing method. For example, the user may select a product material and a background option to generate a higher-quality product image through artificial intelligence. Alternatively, the user may change the background in the image material to the background option selected by the user using the artificial intelligence-based image processing method.

In this implementation, an artificial intelligence-based image generation control may be preset. By triggering the image generation control, the user may trigger a selection operation, and in response to the selection operation triggered by the user, the image material determined by the user may be obtained. In this way, the target image may be generated based on the image material selected by the user and the background option determined by the user.

Here, the image material may be acquired by the user in real time, or may be selected and uploaded by the user from a large number of preset images. The image material may include a content subject region. The content subject region may be a salient region in the image material. For example, the image material may be an image containing an item, and then the content subject region corresponding to the image material may be a region of the item. The image material may be a portrait material, and then the content subject region corresponding to the image material may be a portrait region.

Step 102: displaying a preset image editing page based on the image material, and displaying the image material and at least one preset background option on the image editing page.

In this implementation, in order to enable a front-end display interface to directly perform a content jump operation without having to wait for the extraction operation to be completed before performing the selection operation for the background option, an image processing algorithm may be preset, through which identification and matting operations for the content subject region may be performed.

In this way, after the image material determined by the user is obtained, a preset image editing page may be displayed directly based on the image material. Here, the image material and the at least one preset background option may be displayed on the image editing page.

Optionally, the image material may be displayed on an upper side of the image editing page and the at least one background option may be displayed on a lower side of the image editing page, such that the user can view both the image material and the background option at the same time.

Step 103: generating, in response to a selection operation of the user for the at least one background option, a target image based on a target background option selected by the user and a content subject region in the image material, where the content subject region is obtained after performing matting on subject content in the image material.

In this implementation, the user may perform the selection operation from among the at least one background option according to actual needs. In response to the selection operation triggered by the user, the background option selected by the user may be determined as a current target background option.

During the process of selecting the target background option, the image processing algorithm may perform the identification and matting operations for the content subject region in the image material in the background. After the target background option and the content subject region that is obtained through matting are separately determined, the target image may be generated based on the target background option selected by the user and the content subject region in the image material.

Here, a material synthesis model may be preset, and the content subject region and the target background option are separately input into the material synthesis model to obtain the target image. Compared with the technical solution of directly adding a matting result to a background image, presetting the material synthesis model allows generation of a more natural and realistic target image based on the target background option and the content subject region in the image material.

Step 104: displaying the target image on the image editing page.

In this implementation, after the target image is generated, the target image may be displayed on the image editing page in order to enable the user to view the target image more intuitively.

Optionally, the target image may be displayed on the upper side of the image editing page, the at least one background option may be displayed on the lower side of the image editing page, and the target background option currently selected by the user may be highlighted.

Further, on the basis of any one of the above embodiments, after step 104, the method further includes:
performing, in response to a preset trigger operation of the user on the target image, a further image generation operation based on the target background option and the content subject region to obtain an updated image; or
in response to a trigger operation of the user on other background options on the image editing page, generating a first image based on a candidate background option selected by the user and the content subject region;
switching to display the target image on the image editing page in response to a trigger operation of the user on the target background option; and
performing, in response to a further trigger operation of the user on the target background option, a further image generation operation based on the target background option and the content subject region to obtain an updated image.

In this embodiment, after the target image is generated based on the target background option determined by the user and the content subject region, the user may further generate the updated image based on the target background option and the content subject region according to actual needs.

Optionally, after the target image is displayed on the image editing page, the further image generation operation may be performed based on the target background option and the content subject region in response to a trigger operation of the user on the target image, to obtain an updated image. For example, in practical applications, the target background option may be an outdoor background option. When performing image generation for the first time based on the target background option and the content subject region, the user may generate a target image with the content subject region located in a forest. When performing a further image generation based on the target background option and the content subject region, the user may generate an updated image with the content subject region located in a desert.

Optionally, after generating the target image, the user can also perform a switching operation on the background option on the image editing page. In response to the switching operation triggered by the user, a new first image may be generated based on the background option currently selected by the user and the content subject region. Then, the first image is displayed on the image editing page.

Optionally, each time the target image is generated based on the background option and the content subject region, an associated storage operation may be performed on the target image and its corresponding background option. After the first image is generated, in response to the further trigger operation of the user on the target background option, the target image corresponding to the pre-stored target background option may be obtained and displayed. This eliminates the need to re-perform the image generation operation, thereby improving the image processing efficiency.

Further, after the target image is displayed again based on the trigger operation of the user on the target background option, the further image generation operation may be performed based on the target background option and the content subject region in response to a further trigger operation of the user on the target background option, to obtain an updated image.

As a possible implementation, after the target image is generated based on the content subject region and the target background option, the further image generation operation may be performed based on the target background option and the content subject region in response to a further trigger operation of the user on the target background option, to obtain an updated image.

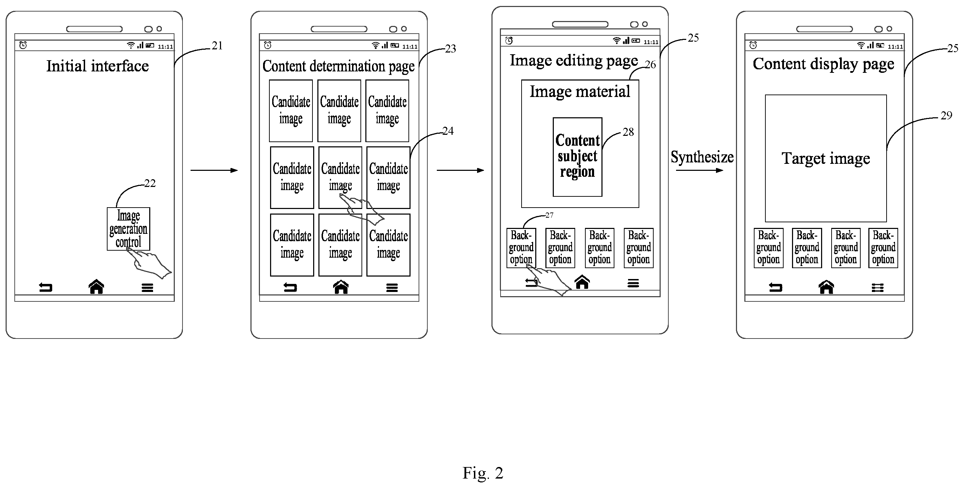

Fig. 2 is a schematic diagram of interface interaction according to an embodiment of the present disclosure. As shown in Fig. 2, the user may trigger an image generation operation in an initial interface 21 by triggering a preset image generation control 22. In response to the trigger operation, a content determination page 23 may be displayed. On the content determination page 23, a plurality of candidate images 24 may be displayed, from which the user may select an image material. A preset image editing page 25 is displayed based on the image material, where the image material 26 and at least one preset background option 27 are displayed on the image editing page 25. In response to a selection operation of the user for at least one background option 27, a target image 29 is generated based on a target background option selected by the user and a content subject region 28 in the image material 26. The target image 29 is displayed on the image editing page 25.

According to the image processing method provided in this embodiment, after the image material determined by the user is obtained, the image material is processed in the background, which makes it possible to directly jump to the image editing page for selection of the background option, where the selection of the background option is independent of the processing result for the image material, thereby avoiding excessive waiting time. In addition, after the image material and the background option are obtained, the target image may be generated based on the background option and the content subject region that is obtained by processing the image material in the background, and the target image may be displayed on the image editing page. Compared with the technical solution of directly adding a matting result to a background image, the image processing method provided in this embodiment makes it possible to generate a more natural and realistic target image based on the target background option and the content subject region in the image material.

Further, on the basis of any one of the above embodiments, after step 101, the method further includes:
identifying and extracting the content subject region in the image material through a preset image processing algorithm.

In this embodiment, in order to enable a front-end display interface to directly perform a content jump operation without having to wait for the extraction operation to be completed before performing the selection operation for the background option, an image processing algorithm may be preset, through which identification and matting operations for the content subject region may be performed in the background. Here, the image processing algorithm may be any algorithm capable of identifying and extracting a subject region in an image. This is not limited in the present disclosure.

Accordingly, after the image material determined by the user is obtained, it is possible to quickly jump to the image editing page, such that the user can select the background option on the image editing page. In addition, the image processing algorithm may perform the identification and matting operations on the content subject region in the image material in the background. In this way, the page jump at the front end is independent of the image processing result, thereby effectively reducing the waiting time.

According to the image processing method provided in this embodiment, after the image material determined by the user is obtained, the image material is processed in the background, such that the front-end display interface may directly perform the content jump operation without having to wait for the extraction operation to be completed before performing the selection operation for the background option, which effectively reduces the waiting time and improves the efficiency of generating the target image.

Further, on the basis of any one of the above embodiments, the method further includes:
displaying, in response to a trigger operation of the user on the content subject region on the image editing page, editing content associated with the content subject region on the image editing page; and
adjusting, in response to an editing parameter determined by the user for the editing content, the content subject region based on the editing parameter, where the editing parameter includes one or more of a display position, a display size, and a display direction.

In this embodiment, after the identification and extraction operations for the content subject region in the image material are completed through the image processing algorithm, the user can also adjust a display parameter of the content subject region, in order to enable the display effect of the content subject region to be more tailored to the personalized needs of the user and improve the display effect of the target image.

Optionally, in response to a trigger operation of the user on the content subject region on the image editing page, the editing content associated with the content subject region is displayed. The editing content may be the content subject region in an editable state, and the user can determine the editing parameter through operations such as rotation, zooming, and dragging of the editing content.

Further, in response to the editing parameter determined by the user for the editing content, the content subject region in the target image is adjusted based on the editing parameter, where the editing parameter includes one or more of a display position, a display size, and a display direction.

For example, the user may adjust the display size of the content subject region through pinching, the user may adjust the display position of the content subject region through dragging, or the user may adjust the display direction of the content subject through the operation of rotating the editing content.

According to the image processing method provided in this embodiment, after the extraction operation for the content subject region in the image material is completed, the editing content is generated based on the trigger operation of the user on the content subject region, such that the user can determine the editing parameter through operations such as rotation, zooming, and dragging of the editing content and then can perform the adjustment operation on the content subject region based on the editing parameter, enabling the finally generated target image to be more tailored to the personalized needs of the user.

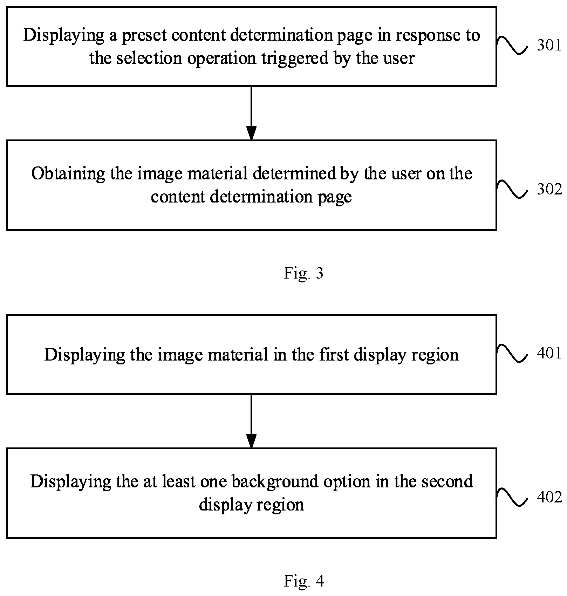

Fig. 3 is a schematic flowchart of an image processing method according to another embodiment of the present disclosure. On the basis of any one of the above embodiments, as shown in Fig. 3, step 101 includes:
step 301: displaying a preset content determination page in response to the selection operation triggered by the user; and.
step 302: obtaining the image material determined by the user on the content determination page.

In this embodiment, the user may perform a trigger operation on a preset image generation control to trigger a selection operation. In response to the selection operation, the content determination page may be displayed, such that the user can determine the image material on the content determination page.

Here, the content determination page includes, but is not limited to, a content acquisition page and a content upload page. The user may determine the image material through uploading or acquisition on the content determination page.

According to the image processing method provided in this embodiment, the preset content determination page is displayed in response to the selection operation triggered by the user, such that the user can perform the operation of determining the image material on the content determination page according to actual needs, enabling the finally generated target image to be more tailored to the personalized needs of the user.

Optionally, on the basis of any one of the above embodiments, the content determination page includes the content upload page, and the content upload page includes a plurality of pieces of preset candidate content. Step 302 includes:
determining, in response to a selection operation of the user on the content upload page, candidate content selected by the user as the image material.

In this embodiment, the content determination page includes the content upload page, and the content upload page includes a plurality of pieces of preset candidate content. In response to the image generation operation triggered by the user, the content upload page may be displayed, such that the user can select the candidate content on the content upload page according to actual needs, and determine the candidate content as the image material.

Optionally, on the basis of any one of the above embodiments, the content determination page includes the content acquisition page, and the content acquisition page includes a preset acquisition control. Step 302 includes:
acquiring, in response to a trigger operation of the user on the acquisition control, the image material by a preset image acquisition apparatus.

In this embodiment, the content determination page may be the content acquisition page, and the content acquisition page includes the preset acquisition control. The user may acquire the image material in real time on the content acquisition page according to actual needs.

Accordingly, in response to a trigger operation of the user on the acquisition control, the preset image acquisition apparatus may be invoked to acquire the image material. For example, the acquisition control may be a shooting control. In response to a trigger operation of the user on the shoot control, the operation of acquiring the image material may be performed by a camera built into a terminal device.

Optionally, in response to the image generation operation triggered by the user, a selection list may be displayed, where the selection list may include an image acquisition option and an image upload option. The user may trigger a corresponding option according to actual needs to enter a different image determination page for selection of the image material.

According to the image processing method provided in this embodiment, providing an image material upload or acquisition function allows the user to select a corresponding way according to actual needs to determine the image material, enabling the process of determining the image material to be more tailored to the personalized needs of the user, thereby improving the user experience.

Further, on the basis of any one of the above embodiments, before step 301, the method further includes:
displaying a preset introduction page in response to detecting that the user triggers the image generation operation for the first time.

The introduction page includes introduction content and a generation control that are associated with the image generation operation.

Step 301 includes:
displaying the preset content determination page in response to a trigger operation of the user on the generation control.

In this embodiment, when the user triggers the image generation operation for the first time, they may have no sufficient understanding of the function and operation process of the image generation operation, and thus may be unable to accurately implement the image generation operation. Therefore, the preset introduction page is displayed in response to detecting that the user triggers the image generation operation for the first time. Here, the introduction page includes the introduction content and the generation control that are associated with the image generation operation. Based on the introduction content, the user may have a preliminary understanding of the function and operation process of the image generation operation. After viewing the introduction content, the user may trigger the generation control to perform the image generation operation.

Accordingly, the preset content determination page is displayed in response to the trigger operation of the user on the generation control. Then, the user can perform the operation of determining the image material on the content determination page.

According to the image processing method provided in this embodiment, when the user triggers the image generation operation for the first time, displaying the introduction page before displaying the content determination page allows the user to have a preliminary understanding of the operation process of the image generation operation, an image generation effect, etc., from the introduction page.

Fig. 4 is a schematic flowchart of an image processing method according to another embodiment of the present disclosure. On the basis of any one of the above embodiments, the image editing page includes a first display region and a second display region. As shown in Fig. 4, step 102 includes:
step 401: displaying the image material in the first display region; and
step 402: displaying the at least one background option in the second display region.

In this embodiment, in order to enrich the display content on the image editing page, the image editing page may be divided into the first display region and the second display region. Here, the first display region and the second display region may be displayed in a vertical layout, or may be displayed in a horizontal layout. The user may adjust display sizes and display positions of the first display region and the second display region according to actual needs.

Further, the image material determined by the user may be displayed in the first display region, and the at least one background option may be displayed in the second display region. This allows the user to view both the image material and the background option at the same time, making it easier to select the background option.

According to the image processing method provided in this embodiment, the first display region and the second display region are provided on the image editing page, such that the image material can be displayed in the first display region and the at least one background option can be displayed in the second display region, which enriches the display content on the image editing page, allowing the user to view more diverse display content on the image editing page.

Further, on the basis of any one of the embodiments described above, step 102 includes the following steps.

The image material, at least one background class, and at least one background option associated with a preset background class are displayed on the image editing page.

In this embodiment, there may be a plurality of background options, which may not be fully displayed on the image editing page. However, in order to enable the user to view all the background options and more intuitively select a background option that meets actual needs, a classification operation may be performed on the background options based on elements contained in the background options, thereby obtaining a plurality of background classes. Here, the background classes include, but are not limited to, an urban background class, a forest background class, an ocean background class, etc.

Thus, the image material, the at least one background class, and the at least one background option associated with the preset background class may be displayed on the image editing page.

In response to a selection operation of the user for at least one background class, a target background class selected by the user is determined.

Switching is performed to display at least one background option associated with the target background class.

According to the image processing method provided in this embodiment, by displaying the image material, the at least one background class, and the at least one background option associated with the preset background class on the image editing page, more background options may be displayed on the image editing page for the user to select, thereby improving the user experience.

Further, different background classes may correspond to different background options. For example, the forest background class may correspond to a plurality of background options including forest elements, and the desert background class may correspond to a plurality of background options including desert elements. The user may view the background options under different background classes according to actual needs.

Optionally, the user may perform a selection operation for at least one background class, and in response to the selection operation, the background class currently selected by the user may be determined as the target background class. In the second display region, switching is performed to display at least one background option associated with the target background class.

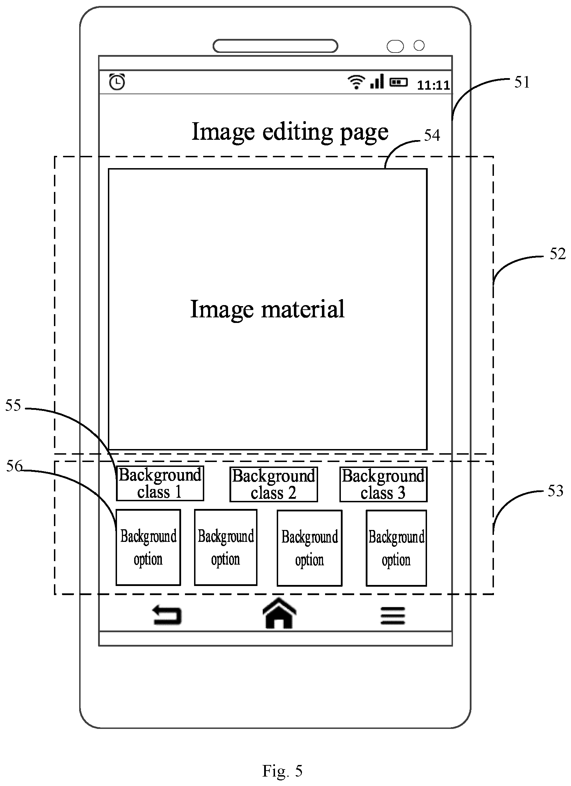

Fig. 5 is a schematic diagram of a display interface according to an embodiment of the present disclosure. As shown in Fig. 5, an image editing page 51 includes a first display region 52 and a second display region 53. An image material 54 may be displayed in the first display region 52, and at least one background class 55 and at least one background option 56 associated with the preset background class may be displayed in the second display region 53.

According to the image processing method provided in this embodiment, switching to display background options associated with different background classes based on the trigger operation of the user allows the content displayed on the image editing page to be more tailored to the personalized needs of the user, enabling the user to determine their favorite background option on the image editing page.

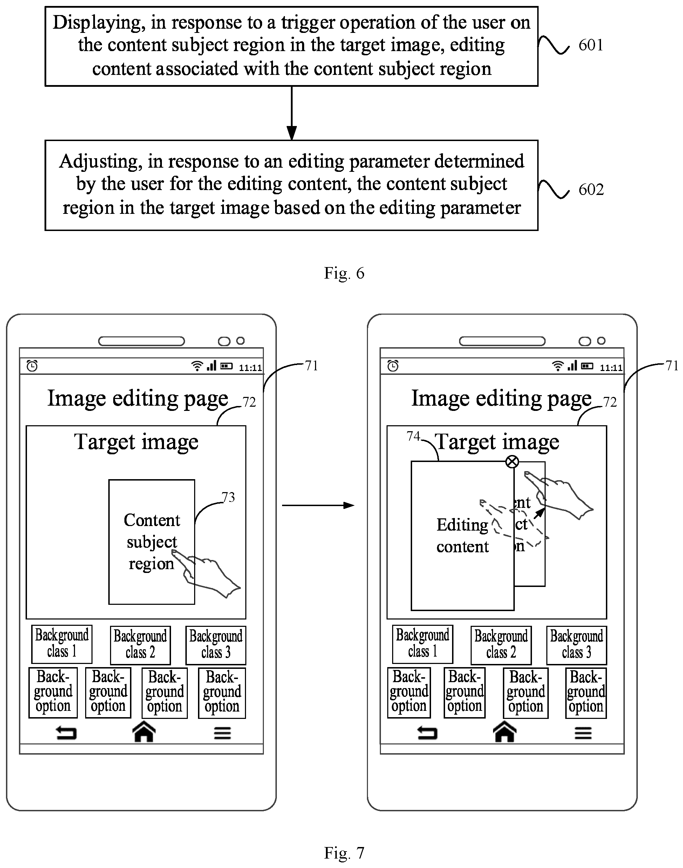

Fig. 6 is a schematic flowchart of an image processing method according to another embodiment of the present disclosure. On the basis of any one of the above embodiments, as shown in Fig. 6, the method further includes:
step 601: displaying, in response to a trigger operation of the user on the content subject region in the target image, editing content associated with the content subject region; and
step 602: adjusting, in response to an editing parameter determined by the user for the editing content, the content subject region in the target image based on the editing parameter, where the editing parameter includes one or more of a display position, a display size, and a display direction.

In this embodiment, in order to enable the display effect of the content subject region to be more tailored to the personalized needs of the user and improve the display effect of the target image, the user can also adjust the display parameter of the content subject region after the target image is generated based on the content subject region and the background option.

Optionally, in response to the trigger operation of the user on the content subject region in the target image, the editing content associated with the content subject region is displayed. The editing content may be the content subject region in an editable state, and the user can determine the editing parameter through operations such as rotation, zooming, and dragging of the editing content.

Further, in response to the editing parameter determined by the user for the editing content, the content subject region in the target image is adjusted based on the editing parameter, where the editing parameter includes one or more of a display position, a display size, and a display direction.

For example, the user may adjust the display size of the content subject region through pinching, the user may adjust the display position of the content subject region through dragging, or the user may adjust the display direction of the content subject through the operation of rotating the editing content.

According to the image processing method provided in this embodiment, after the target image is generated, in response to the trigger operation of the user on the content subject region in the target image, the editing content associated with the content subject region is displayed, such that the user can determine the editing parameter through the operations such as rotation, zooming, and dragging of the editing content and then can perform the adjustment operation on the content subject region based on the editing parameter, enabling the finally generated target image to be more tailored to the personalized needs of the user.

Further, on the basis of any one of the above embodiments, after step 601, the method further includes:
generating a triggerable editing layer based on the content subject region, and determining the editing layer as the editing content; and
adjusting a display parameter of the target image to highlight the editing content.

In this embodiment, in order to facilitate the adjustment operation of the user on the content subject region, the triggerable editing layer may be generated based on the content subject region, and the editing layer may be determined as the editing content. In order to enable the user to view the adjustment effect of the content subject region more intuitively, the display parameter of the target image may be adjusted to highlight the editing content.

For example, parameters such as the brightness and saturation of the target image may be reduced to make the target image present a darker display effect, so as to highlight the editing content.

Fig. 7 is another schematic diagram of interface interaction according to an embodiment of the present disclosure. As shown in Fig. 7, a target image 72 may be displayed on an image editing page 71. Here, the target image 72 may include a content subject region 73, and editing content 74 associated with the content subject region 73 may be displayed in response to a trigger operation of the user on the content subject region 73. The user may generate an editing parameter through operations such as moving, zooming, and rotation of the editing content 74, such that a subsequent editing operation may be performed on the content subject region 73 based on the editing parameter.

According to the image processing method provided in this embodiment, the display parameter of the target image is adjusted to highlight the editing content, such that the user can view the content subject region more intuitively, making it easier for the user to perform an adjustment operation on the content subject region.

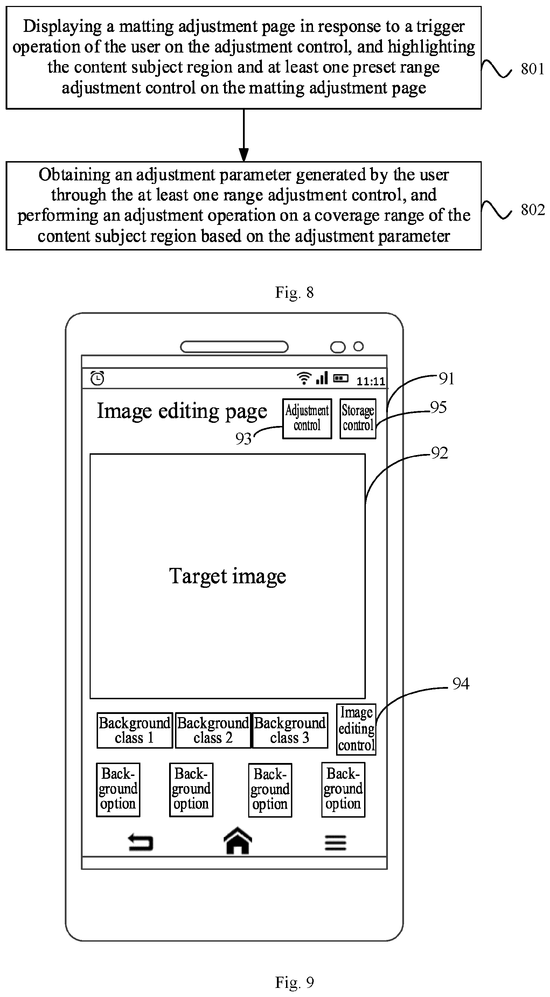

Fig. 8 is a schematic flowchart of an image processing method according to another embodiment of the present disclosure. On the basis of any one of the above embodiments, the image editing page further includes a preset adjustment control. As shown in Fig. 8, after step 104, the method further includes:
step 801: displaying a matting adjustment page in response to a trigger operation of the user on the adjustment control, and highlighting the content subject region and at least one preset range adjustment control on the matting adjustment page; and
step 802: obtaining an adjustment parameter generated by the user through the at least one range adjustment control, and performing an adjustment operation on a coverage range of the content subject region based on the adjustment parameter.

In this embodiment, after the identification and extraction of the content subject region are completed through the image processing algorithm in the background, the image processing algorithm may not be able to meet the personalization needs of the user. Therefore, in order to further improve the image quality of the target image, the user may also manually perform an adjustment operation on the content subject region according to actual needs.

Optionally, the image editing page further includes the preset adjustment control. To avoid occlusion of the target image, the adjustment control may be displayed at the upper right corner of the image editing page. The matting adjustment page may be displayed in response to the trigger operation of the user on the adjustment control. The content subject region extracted using the image processing algorithm is highlighted on the matting adjustment page, where the content subject region is in an adjustable state, and the user may perform an adjustment operation on the shape and coverage range of the content subject region based on an interaction operation. In addition, the matting adjustment page further includes at least one preset range adjustment control. Here, the range adjustment control includes, but is not limited to, a painting brush control, an erase control, a quick matting control, a reset control, etc.

The user may perform, on the matting adjustment page, the adjustment operation on the shape and coverage range of the content subject region through the at least one range adjustment control. The adjustment parameter generated by the user through the at least one range adjustment control is obtained, and the adjustment operation is performed on the coverage range of the content subject region based on the adjustment parameter.

For example, in practical applications, the user may trigger the painting brush control to select a target brush, perform a painting operation on a display region associated with the content subject region by using the target brush, determine the region painted by the user as the adjustment parameter, and add the painted region to the content subject region.

According to the image processing method provided in this embodiment, the preset adjustment control is displayed on the image editing page, such that the user may trigger the adjustment control to implement the adjustment operation for the range of the content subject region in the target image, enabling the shape of the content subject region to be more tailored to the personalized needs of the user, and improving the quality of the target image.

Further, on the basis of any one of the above embodiments, the image editing page further includes a preset image editing control.

After step 104, the method further includes:
displaying, in response to a trigger operation of the user on the image editing control, at least one editing control for performing an editing operation on the target image on the image editing page; and
obtaining a target editing parameter determined by the user through the at least one editing control, and performing an image editing operation on the target image based on the target editing parameter.

In this embodiment, the image editing page further includes the preset image editing control. In order to enable the display effect of the target image to be more tailored to the personalized needs of the user, the user may also adjust the display parameter, a color parameter, and other parameters of the target image through the image editing control.

Optionally, in response to the trigger operation of the user on the image editing control, at least one editing control for performing the editing operation on the target image may be displayed on the image editing page. Here, the editing control includes, but is not limited to, a text input control, a size adjustment control, a color adjustment control, a style adjustment control, etc.

As a possible implementation, in response to the trigger operation of the user on the image editing control, it is possible to switch to display the at least one editing control in the display region of the image editing page where the background option is displayed. Alternatively, it is possible to display the at least one editing control in a preset display region of the image editing page. This is not limited in the present disclosure.

The user may determine the target editing parameter through the trigger operation on the editing control. For example, the user may determine a size adjustment parameter by triggering the size adjustment control. Thus, after the target editing parameter is obtained, the image editing operation may be performed on the target image based on the target editing parameter.

According to the image processing method provided in this embodiment, the preset image editing control is displayed on the image editing page, such that the user may implement the adjustment operation for content such as the display parameter and the color parameter of the target image through the trigger operation on the image editing control, enabling the display effect of the target image to be more tailored to the personalized needs of the user, thereby improving the user experience.

Further, on the basis of any one of the above embodiments, the image editing page further includes a preset storage control.

After step 104, the method further includes:
storing the target image in a preset storage path in response to a trigger operation of the user on the storage control.

In this embodiment, the image editing page further includes the preset storage control. Here, in order to avoid occlusion of the target image, the storage control may be displayed at the upper right corner of the image editing page. The user may implement a storage operation for the target image through the storage control.

Optionally, the target image is stored in the preset storage path in response to the trigger operation of the user on the storage control.

As a possible implementation, a sharing control may further be displayed on the image editing page. A plurality of sharing paths may be displayed in response to a trigger operation of the user on the sharing control, where the sharing paths include, but are not limited to, sharing to a social network, posting the target image, storing an image, etc. In response to the user's selection for a sharing path, a sharing operation is performed on the target image based on a target sharing path selected by the user.

Fig. 9 is a schematic diagram of another display interface according to an embodiment of the present disclosure. As shown in Fig. 9, a target image 92 may be displayed on an image editing page 91. The image editing page 91 further includes an adjustment control 93. By triggering the adjustment control 93, the user may implement an adjustment operation for an edge of the content subject region in the target image. In addition, the image editing page 91 further includes a preset image editing control 94. Through a trigger operation of the user on the image editing control 94, the user may implement an adjustment operation for content such as the display parameter or the color parameter of the target image 92. The image editing page 91 further includes a preset storage control 95. Through a trigger operation of the user on the storage control 95, the user may implement a storage operation for the target image.

According to the image processing method provided in this embodiment, displaying the preset storage control on the image editing page allows the user to quickly implement the storage operation for the target image through a trigger operation on the storage control.

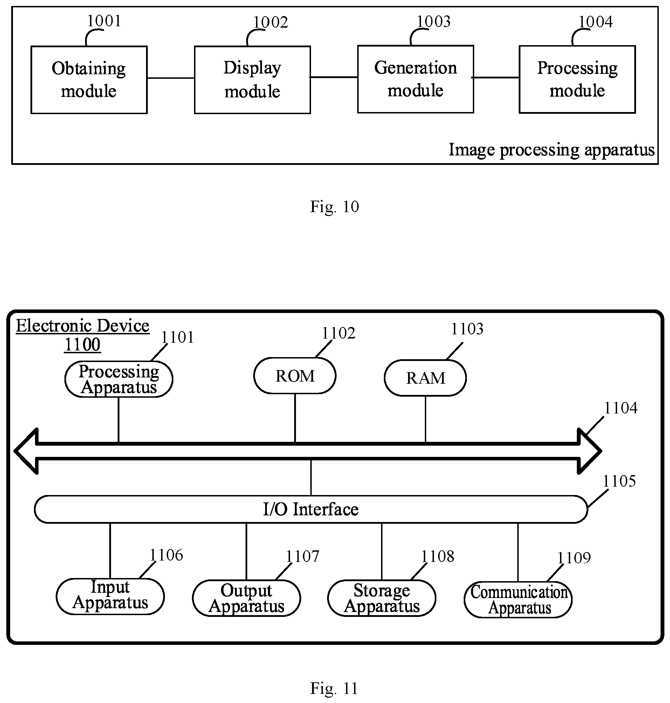

Fig. 10 is a schematic structural diagram of an image processing apparatus according to an embodiment of the present disclosure. As shown in Fig. 10, the apparatus includes an obtaining module 1001, a display module 1002, a generation module 1003, and a processing module 1004. Here, the obtaining module 1001 is configured to obtain, in response to a selection operation triggered by a user, an image material determined by the user. The display module 1002 is configured to display a preset image editing page based on the image material, and display the image material and at least one preset background option on the image editing page. The generation module 1003 is configured to generate, in response to a selection operation of the user for the at least one background option, a target image based on a target background option selected by the user and a content subject region in the image material, where the content subject region is obtained after performing matting on subject content in the image material. The processing module 1004 is configured to display the target image on the image editing page.

Further, on the basis of any one of the above embodiments, the obtaining module is configured to: display a preset content determination page in response to the selection operation triggered by the user; and obtain the image material determined by the user on the content determination page.

Further, on the basis of any one of the above embodiments, the content determination page includes a content upload page, and the content upload page includes a plurality of pieces of preset candidate content. The obtaining module is configured to determine, in response to a selection operation of the user on the content upload page, candidate content selected by the user as the image material. Alternatively, the content determination page includes a content acquisition page, and the content acquisition page includes a preset acquisition control. The obtaining module is configured to acquire, in response to a trigger operation of the user on the acquisition control, the image material by a preset image acquisition apparatus.

Further, on the basis of any one of the above embodiments, the obtaining module is configured to display a preset introduction page in response to detecting that the user triggers the image generation operation for the first time. The introduction page includes introduction content and a generation control that are associated with the image generation operation. The obtaining module is configured to display the preset content determination page in response to a trigger operation of the user on the generation control.

Further, on the basis of any one of the above embodiments, the apparatus further includes an identification module configured to identify and extract the content subject region in the image material through a preset image processing algorithm.

Further, on the basis of any one of the above embodiments, the apparatus further includes: a display module configured to display, in response to a trigger operation of the user on the content subject region on the image editing page, editing content associated with the content subject region on the image editing page; and an editing module configured to adjust, in response to an editing parameter determined by the user for the editing content, the content subject region based on the editing parameter, where the editing parameter includes one or more of a display position, a display size, and a display direction.

Further, on the basis of any one of the above embodiments, the image editing page includes a first display region and a second display region. The display module is configured to: display the image material in the first display region; and display the at least one background option in the second display region.

Further, on the basis of any one of the above embodiments, the display module is configured to: display the image material, at least one background class, and at least one background option associated with a preset background class on the image editing page; determine, in response to a selection operation of the user for at least one background class, a target background class selected by the user; and switch to display at least one background option associated with the target background class.

Further, on the basis of any one of the above embodiments, the apparatus further includes: a display module configured to display, in response to a trigger operation of the user on the content subject region in the target image, editing content associated with the content subject region; and an adjustment module configured to adjust, in response to an editing parameter determined by the user for the editing content, the content subject region in the target image based on the editing parameter, where the editing parameter includes one or more of a display position, a display size, and a display direction.

Further, on the basis of any one of the above embodiments, the apparatus further includes: a generation module configured to generate a triggerable editing layer based on the content subject region, and determine the editing layer as the editing content; and an adjustment module configured to adjust a display parameter of the target image to highlight the editing content.

Further, on the basis of any one of the above embodiments, the image editing page further includes a preset adjustment control. The apparatus further includes: a display module configured to display a matting adjustment page in response to a trigger operation of the user on the adjustment control, and highlight the content subject region and at least one preset range adjustment control on the matting adjustment page; and an adjustment module configured to obtain an adjustment parameter generated by the user through the at least one range adjustment control, and perform an adjustment operation on a coverage range of the content subject region based on the adjustment parameter.

Further, on the basis of any one of the above embodiments, the image editing page further includes a preset image editing control. The apparatus further includes: a display module configured to display, in response to a trigger operation of the user on the image editing control, at least one editing control for performing an editing operation on the target image on the image editing page; and an editing module configured to obtain a target editing parameter determined by the user through the at least one editing control, and perform an image editing operation on the target image based on the target editing parameter.

Further, on the basis of any one of the above embodiments, the image editing page further includes a preset storage control. The apparatus further includes a storage module configured to store the target image in a preset storage path in response to a trigger operation of the user on the storage control.

Further, on the basis of any one of the above embodiments, the apparatus further includes: an update module configured to perform, in response to a preset trigger operation of the user on the target image, a further image generation operation based on the target background option and the content subject region to obtain an updated image; or a generation module configured to generate, in response to a trigger operation of the user on other background options on the image editing page, a first image based on a candidate background option selected by the user and the content subject region; a switching module configured to switch to display the target image on the image editing page in response to a trigger operation of the user on the target background option; and an update module configured to perform, in response to a further trigger operation of the user on the target background option, a further image generation operation based on the target background option and the content subject region to obtain an updated image.

The apparatus provided in this embodiment may be configured to perform the technical solution of the above method embodiment. The implementation principle and technical effects thereof are similar, and are not described herein again in this embodiment.

In order to implement the above embodiments, the embodiments of the present disclosure further provide a computer-readable storage medium storing computer-executable instructions, and the computer-executable instructions, when executed by a processor, cause the image processing method according to any one of the above embodiments to be implemented.

In order to implement the above embodiments, the embodiments of the present disclosure further provide a computer program product including a computer program, and the computer program, when executed by a processor, causes the image processing method according to any one of the above embodiments to be implemented.

To implement the above embodiments, the embodiments of the present disclosure further provide an electronic device. The electronic device includes a processor and a memory;
the memory stores computer-executable instructions; and
the computer-executable instructions stored in the memory, when executed by the processor, cause the processor to perform the image processing method according to any one of the above embodiments.

Fig. 11 is a schematic structural diagram of an electronic device according to an embodiment of the present disclosure. As shown in Fig. 11, the electronic device 1100 may be a terminal device or a server. The electronic device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic device shown in Fig. 11 is merely an example, and shall not impose any limitation on the function and scope of use of the embodiments of the present disclosure.

As shown in Fig. 11, the electronic device 1100 may include a processing apparatus 1101 (for example, a central processing unit or a graphics processing unit) that may perform a variety of appropriate actions and processing based on a program stored in a read-only memory (ROM) 1102 or a program loaded from a storage apparatus 1108 into a random-access memory (RAM) 1103. The RAM 1103 further has various programs and data required for the operation of the electronic device 1100 stored therein. The processing apparatus 1101, the ROM 1102, and the RAM 1103 are connected to one another through a bus 1104. An input/output (I/O) interface 1105 is also connected to the bus 1104.

Generally, the following apparatuses may be connected to the I/O interface 1105: an input apparatus 1106 including, for example, a touchscreen, a touchpad, a keyboard, a mouse, a camera, a microphone, an accelerometer, and a gyroscope; an output apparatus 1107 including, for example, a liquid crystal display (LCD), a speaker, and a vibrator; the storage apparatus 1108 including, for example, a magnetic tape and a hard disk drive; and a communication apparatus 1109. The communication apparatus 1109 may allow the electronic device 1100 to perform wireless or wired communication with other devices to exchange data. Although Fig. 11 shows the electronic device 1100 having various apparatus, it should be understood that it is not required to implement or have all of the shown apparatus. It may be an alternative to implement or have more or fewer apparatus.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 1109, installed from the storage apparatus 1108, or installed from the ROM 1102. When the computer program is executed by the processing apparatus 1101, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. An image processing method, comprising:
obtaining, in response to a selection operation triggered by a user, an image material determined by the user;
displaying a preset image editing page based on the image material, and displaying the image material and at least one preset background option on the image editing page;
generating, in response to a selection operation of the user for the at least one background option, a target image based on a target background option selected by the user and a content subject region in the image material, wherein the content subject region is obtained after performing matting on subject content in the image material; and
displaying the target image on the image editing page.

2. The method according to claim 1, wherein the obtaining, in response to the selection operation triggered by the user, the image material determined by the user comprises:
displaying a preset content determination page in response to the selection operation triggered by the user; and
obtaining the image material determined by the user on the content determination page.

3. The method according to claim 2, wherein the content determination page comprises a content upload page, and the content upload page comprises a plurality of pieces of preset candidate content; and
the obtaining the image material determined by the user on the content determination page comprises:
determining, in response to a selection operation of the user on the content upload page, candidate content selected by the user as the image material;
or
the content determination page comprises a content acquisition page, and the content acquisition page comprises a preset acquisition control; and
the obtaining the image material determined by the user on the content determination page comprises:
acquiring, in response to a trigger operation of the user on the acquisition control, the image material by a preset image acquisition apparatus.

4. The method according to any one of claims 1 to 3, wherein after the obtaining the image material determined by the user, the method further comprises:
identifying and extracting the content subject region in the image material through a preset image processing algorithm.

5. The method according to any one of claims 1 to 4, wherein the displaying the image material and the at least one preset background option on the image editing page comprises:
displaying the image material, at least one background class, and at least one background option associated with a preset background class on the image editing page;
determining, in response to a selection operation of the user for the at least one background class, a target background class selected by the user; and
switching to display at least one background option associated with the target background class.

6. The method according to any one of claims 1 to 5, further comprising:
displaying, in response to a trigger operation of the user on the content subject region in the target image, editing content associated with the content subject region; and
adjusting, in response to an editing parameter determined by the user for the editing content, the content subject region in the target image based on the editing parameter, wherein the editing parameter comprises one or more of a display position, a display size, and a display direction.

7. The method according to claim 6, wherein after in response to the trigger operation of the user on the content subject region in the target image, the method further comprises:
generating a triggerable editing layer based on the content subject region, and determining the editing layer as the editing content; and
adjusting a display parameter of the target image to highlight the editing content.

8. The method according to any one of claims 1 to 7, wherein the image editing page further comprises a preset adjustment control; and
after the displaying the target image on the image editing page, the method further comprises:
displaying a matting adjustment page in response to a trigger operation of the user on the adjustment control, and highlighting the content subject region and at least one preset range adjustment control on the matting adjustment page; and
obtaining an adjustment parameter generated by the user through the at least one range adjustment control, and performing an adjustment operation on a coverage range of the content subject region based on the adjustment parameter.

9. The method according to any one of claims 1 to 8, wherein the image editing page further comprises a preset image editing control; and
after the displaying the target image on the image editing page, the method further comprises:
displaying, in response to a trigger operation of the user on the image editing control, at least one editing control for performing an editing operation on the target image on the image editing page; and
obtaining a target editing parameter determined by the user through the at least one editing control, and performing an image editing operation on the target image based on the target editing parameter.

10. The method according to any one of claims 1 to 9, wherein after the displaying the target image on the image editing page, the method further comprises:
performing, in response to a preset trigger operation of the user on the target image, a further image generation operation based on the target background option and the content subject region to obtain an updated image; or
performing, in response to a further trigger operation of the user on the target background option, a further image generation operation based on the target background option and the content subject region to obtain an updated image.

11. An image processing apparatus, comprising:
an obtaining module, configured to obtain, in response to a selection operation triggered by a user, an image material determined by the user;
a display module, configured to display a preset image editing page based on the image material, and display the image material and at least one preset background option on the image editing page;
a generation module, configured to generate, in response to a selection operation of the user for the at least one background option, a target image based on a target background option selected by the user and a content subject region in the image material, wherein the content subject region is obtained after performing matting on subject content in the image material; and
a processing module, configured to display the target image on the image editing page.

12. An electronic device, comprising a processor and a memory,
wherein the memory stores computer-executable instructions; and
the computer-executable instructions stored in the memory, when executed by the processor, cause the processor to perform the image processing method according to any one of claims 1 to 10.

13. A computer-readable storage medium, storing computer-executable instructions, wherein the computer-executable instructions, when executed by a processor, cause the image processing method according to any one of claims 1 to 10 to be implemented.
